# EUROPEAN PATENT APPLICATION

(11) **EP 1 357 472 A1**
(43) Date of publication of application: **29.10.2003**
(21) Application number: 02354068.5
(22) Date of filing: 23.04.2002
(51) Int. Cl.: G06F 9/46

(54) **Resilient protocol for control of composite services**

(71) Applicant: Hewlett-Packard Company, A Delaware Corporation, Palo Alto, CA 94304 (US)
(72) Inventor: Durand, Yves, 38330 Saint Ismier (FR)
(74) Representative: Lloyd, Richard Graham

(57) **Abstract**

The invention provides for a method and apparatus for coordinating the execution of a composite distributed application in an environment comprised of a plurality of resources. The resources are generally computer resources which carry out functions such as file storage, manipulation and transmission. The method includes the steps of specifying the application in terms of a workorder. The workorder is adapted to decompose the application into a series of discrete actions to be executed on corresponding resources. The workorder is then pipelined through the resources in such a way that each resource is responsible for executing its task, the resource forwarding the remainder of the workorder to the following resource. Then acknowledgement of the successful operation of the resource is communicated to the resource from which it received the workorder. If errors of failures occur in the process, the workorder is dynamically modified to reconfigure the aggregated resources so that fallback positions take into account communications failures etc. Alternative and extended embodiments include the capability to take into account parallel task configuration and workorder manipulation to avoid duplication in task execution. The invention can be applied to a large variety of services examples of which include delivery of media over networks, data manipulation and communications.

## Description

### Technical Field

The present invention relates to methods and apparatus for managing and controlling the provision of composite services. More particularly, although not exclusively, the invention relates to methods and apparatus for improving the resilience of a protocol applicable to the provision of composite services in a distributed workflow environment.

### Background Art

The aim of the invention is to reliably control the distributed execution of a composite service. A composite service is a distributed software application which functions according to the ordered execution of one or more existing service elements or application tasks. These service elements are executed on one or more devices, known as resources.

A composite service incorporates temporal and dataflow dependencies between the service elements which, when combined with the functionality of the various resources, constitutes the composite service function as a whole. Such services "arise" out of device task execution and the interaction between devices. The devices notionally aggregate and disperse as required by the particular task which is to be performed. Coordinating this aggregation of devices requires appliance middleware which enables the collection of devices to act as a community.

In this context, a simple example of a composite service is an application which downloads a video clip to a mobile device from a source on the Internet. Here, the service elements include tasks such as requesting the resource, locating the resource, transmitting the resource between various devices handling the composite service (servers, PCs, video recorders etc) and interpreting between different platform formats where necessary. Here the service elements include the file-server which stores the video file, the end-user device (such as a PDA) and a machine which acts as an intermediary between the display device and the source. This intermediary will often carry out temporary storage, spooling and file translation into the format necessary to display the data on the users device. Other functions may be required such as accounting, user verification and other administration tasks.

Distributed applications, such as composite services, are common in the context of the Internet. The most common types of these applications conform to a three-layered model. This model is composed of a front-end, usually a browser, a middle-layer which implements the core application and a back-end which is usually a centralized database. This type of application uses a discrete transaction model such that the application will usually fail whenever one of the intermediate components fails. Any distributed environment such as the Internet is susceptible to faults in the form of communications loss, hardware failure and arbitrary reconfiguration of network resources. Therefore service provision in such an environment will require an infrastructure which is stable enough to mediate the required service and implement alternate execution paths for the service should this be required. Although it may appear a truism, it is also necessary that in a fault tolerant system, each intermediate task be performed once and only once. This not only avoids conflicts in execution, but also unnecessary use of communication and execution resources in the distributed environment.

Given that any distributed environment such as the internet is susceptible to faults derived from communications (data) loss, hardware failure and arbitrary reconfiguration of network resources, service provision will require some form of resilience or fault tolerance in the execution of the application.

Further, as applications become more complicated and take longer to execute, the transactional model becomes less ideal. To properly and reliably implement composite services, asynchronous device and task mediation is required as well as the "at least once" execution of tasks. This latter constraint corresponds to any action terminating even when one of the components disappears during execution. It is also desirable that any submitted action is performed only once. The distributed environment should guarantee that the same actions are never unnecessarily executed twice, even in case of exceptions.

To implement systems which are capable of functioning in this manner, it is known to apply techniques related to workflow analysis found in the fields of process automation. These techniques have been adapted to managing process execution in network environments and have been manifested by the establishment of a standardized model, the WfMC (Workflow Management Coalition) model.

However, the presently available applications do not support the required level of resilience. IBM's Rainman project is an initial improvement. Because of its decentralized operation mode, it offers some resilience. In this case application resilience is based on compensation which means that each action must be able to be reversed or associated with an "undo" action. However, Rainman uses centralized entities for synchronization, and thus, it remains susceptible to single points of failure

It is an object of the present invention to take a high level approach and provide an improved protocol which can reliably manage distributed composite tasks on several devices with minimal interdependence between resources.

### Disclosure of the Invention

In one aspect the invention provides for a method of coordinating the execution of a composite distributed application in an environment comprised of a plurality of resources, the method including the steps of: specifying the application in terms of a workorder, the workorder adapted to decompose the application into a series of discrete actions to be executed on corresponding resources; pipelining the workorder through the resources in such a way that each resource is responsible for executing its task, the resource forwarding the remainder of the workorder to the following resource; communicating acknowledgement of the successful operation of the resource to the resource from which it received the workorder.

Thus, if one of the resources or interaction between resources fails, the previous resource will not receive a completion acknowledgement from the failed resource and the workorder is amended to take the failure into account and sent to a different resource. This provides resilience by allowing dynamic modification of the workorder.

In a preferred embodiment, the method comprises the steps of:
- initiating the application;
- constructing a workorder representing a sequence of actions *T*_{*i*} to be performed by corresponding resources *R*_{*i*} ;
- transmitting the workorder to the first resource in the workorder; wherein each resource *R*_{*i*} carries out a corresponding action *T*_{*i*} and on completion of the action, transmits an acknowledgment to resource *R*_{*i-*}₁ before updating the workorder to reflect the successful completion of the action *T*_{*i*} and transmitting it to resource *R*_{*i*}₊₁.
Where resource *R*_{*i*}₋₁ does not receive the acknowledgement, the workorder is updated to reflect the failure of resource *R*_{*i*} and the workorder is transmitted to an alternative resource *R*_{*i*}'.

Preferably the failure of resource *R*_{*i*} may be manifested by a timeout in the reception of the acknowledgement by resource by the resource *R*_{*i*}₋₁.

The workorder preferably carries information adapted to identify one or more tasks so that where duplicate task execution occurs; the receipt of multiple workorders reflecting such task duplication can be compensated for.

In an alternative embodiment, one or more task may be parallelized by forking a task into two or more sub-tasks and creating correspondingly adapted workorders.

In such an embodiment, a corresponding recipient resource joins the one or more sub-task outputs on their completion.

The invention also provides a computer network adapted to operate in accordance with the method as hereinbefore defined.

The invention also provides a computer adapted to operate as a resource acting in accordance with the method as hereinbefore defined.

### Brief Description of the Drawings

The present invention will now be described by way of example only and with reference to the drawings in which:
- Figure 1:: illustrates a highly simplified schematic of a distributed application executed by a handheld device and mediated via a network and network resources;
- Figure 2:: illustrates a schematic representation of how a distributed application is planned and mediated between a number of resources, here recording a video from internet sequence;
- Figure 3:: illustrates how a workorder is used to mediate a distributed application arising out of the operation of *R*_{*n*} resources;
- Figure 4:: illustrates the acknowledgement steps in the operation path of a distributed application;
- Figure 5:: illustrates the application of a resilient workorder methodology in the context of requesting a multimedia resource;
- Figure 6:: illustrates the failure of resource *R*_{*i*}₊₁ and the subsequent resilient re-planning of the distributed task;
- Figure 7:: illustrates a timeout detection, in the form of a PC failure, and the subsequent re-planning and execution of the failed function on a backup device;
- Figure 8:: illustrates the execution of parallel tasks in a distributed environment; and
- Figure 9:: illustrates a case of competing execution of identical tasks and how the fallback position is handled.

### Best Mode for Carrying Out the Invention

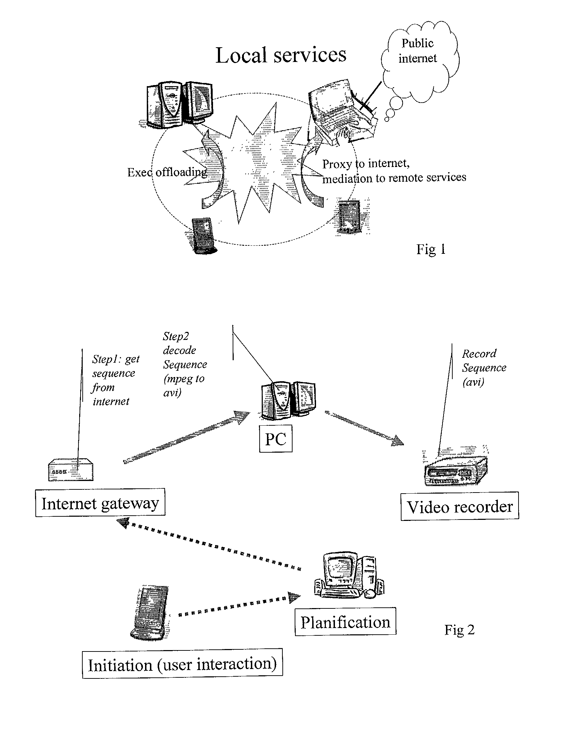

Figure 1 illustrates the concept of a collection of devices temporarily aggregating to provide a specified local service or fulfill a task. In this case, a desktop PC 13, laptop 12 and PDA devices 10 and 11 act as a 'community' by aggregating their function spontaneously in order to provide a service.

For example, a PDA may request a service which requires that the execution of the request be mediated by another device such as a PC or laptop which itself interacts with internet-based resources. This aggregation of devices coalesces as a community to fulfill the request, then dissipates once the request (such as file delivery) has been accomplished.

Figure 2 illustrates an example of how a task can be broken down into a composite task reflecting the structure of the aggregate device community and their capabilities. Here, the basic task, or application, is to record, on a video recorder 25, a copy of an internet multimedia sequence. This request illustrates a simplified embodiment of the invention whereby the execution of the composite distributed application occurs in an environment made up of a plurality of resources 20, 21, 22, 23, 24 and 25.

The application or request is specified in terms of a workorder. The workorder is a file or entity constructed so as to decompose the application into a series of discrete actions or tasks which are to be executed on corresponding resources. Here, the resources are the PDA 20, planning means 21, internet gateway 23, decoding/translation means 24 and video recorder 25. The workorder is pipelined through the resources so that each resource is responsible for executing its particular task. As each resource processes the steps set out in the workorder, it forwards the remainder of the workorder (i.e.; the outstanding workorder) to the resource which follows on the workorder list. In each resource/task handoff, the precedent resource can be referred to as the *initiator* and the subsequent resource as the *target*. Once the workorder is passed on, the resource communicates acknowledgement of completion of its successful operation to the resource from which it received the workorder.

Initially, in the context of the example shown in figure 2, the user makes the request, via his or her PDA 20 to record, using a video recorder 21, a multimedia sequence. The request is entered using a suitable interface on the PDA 20 which might correspond to a icon or text based system analogous to a print or other peripheral or I/O control dialog. The request is planned on a planning means 21. In this case, the planning means 21 may be a computer system or agent of some type which is configured to construct the workorder on receipt of a request.

Once the workorder is built, it is sent back to the initiator PDA 20 which then sends it to the first resource in the workorder, here the Internet gateway 23. If the planner itself fails, the absence of an ack from it would signal the initiator to try another one. The gateway machine 23 performs the first step in the workorder which corresponds to a "get sequence from Internet". The gateway machine 23 locates the media sequence, copies it, and forwards it to a decoding means 24. As the gateway 23 forwards the workorder (and requested data) to the decoding means 24, it notifies the planning means 21 of the successful completion of its task by means of an *ack*. The gateway machine 23 also amends the workorder to reflect the completion of the task. Once the decoding means 24 receives the workorder and data, it carries out its function of translating the data from mpeg to AVI format.

At this stage, assuming that the function of the internet gateway 23 has been correctly completed, the planning means 21 is 'aware' of this fact and the workorder been properly amended to reflect this. If the selected internet gateway 23 had failed, here failure being manifested as the planning means 21 timing out while it waits for the gateways completion notification, the planning means 21 would have resent the workorder to another internet gateway. A failure event such as this will be discussed in more detail below.

Once the decoding means 24 has completed reformatting the mpeg file into a file in AVI format, it amends the workorder appropriately and transmits the amended workorder and reformatted data to the video recorder 25. The video recorder 25 receives the workorder and data and carries out its function, namely, transferring the AVI formatted file onto videotape. Once the video recorder 25 has completed this successfully, it transmits an *ack* to the decoder (PC) thereby informing the decoder that it has performed its nominated task.

In this example it can be seen that if any step in the distributed application breaks down or fails in any way, the aggregation of the devices resiliently re-configures itself by a combination of monitoring the workorder and listening for an ack from upstream of the task sequence. A final step in the workorder in this case might include transmitting a notification to the users PDA 20 that the task has been completed successfully.

This sequence is predicated on a number of assumptions including how long a task should take before the workorder is replanned and sent to an alternate resource as well as an *a priori* knowledge of the resource infrastructure which is available to carry out the distributed application. This will be discussed in detail below.

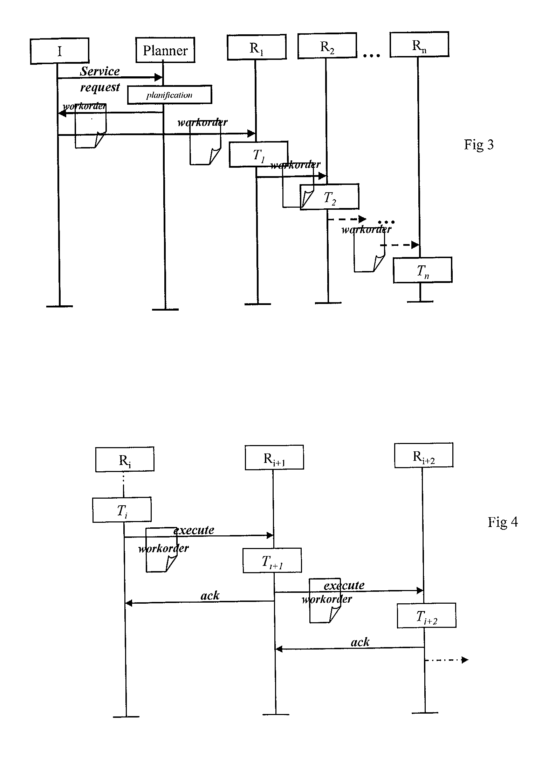

The distributed application shown in Figure 2 is shown in the dataflow diagram of Figure 3. Figure 3 only illustrates the forward dataflow ignoring, for the present, the ack transmissions indicating successful task completion. Here, the initiator I, corresponding to the users PDA 20, sends a service request to the planner. The planner constructs the workorder and transmits it back to the initiator. The initiator then follows the first step in the workorder which specifies the first resource *R*₁. The resource *R*₁ performs its task and modifies the workorder appropriately to reflect the completion of its task and the pending status of the next action. The resource *R*₁ then sends the workorder and data (not shown) to the next resources *R*₂ listed on the workorder. Resource *R*₂ carries out its nominated task *T*₂ and then amends the workorder. This workorder is passed to the next resource in the workorder (along with any data) and the sequence continues.

Each resource and corresponding task couplet (*R*_{*i*},*T*_{*i*}) is decoupled from all resources more than one step upstream or downstream. Therefore, the successful completion of the whole application or request is not dependant on each and every predetermined resource successfully completing its predefined task. As will be illustrated by the following description, the aggregated community of resources can re-configure itself to take into account any failures.

At this point it is useful to specify a protocol vocabulary which will aid in analysis of the detailed embodiment presented herein.

The vocabulary corresponds to messages M of the form M={*plan, execute, ack, replan, fork, join*}.

A *plan* message is a message sent from the initiator I to the *planning agent* P. The planning agent responds with a completed workorder.

An *execute* message is a message sent from the initiator to a resource, or from any resource to another resource. It is sent together with a workorder.

An *ack* message is a message sent from a resource to another resource or to the initiator. It is used by a resource *R*_{*i*} to notify a resource *R*_{*i*}₋₁ that the execute message it sent has been received, that resource *R*_{*i*} has executed its task *T*_{*i*} and that is has forwarded the workorder to the next resource on the list *R*_{*i*}₊₁.

The *replan* message is a message sent from a resource *R*_{*i*} to the planning agent notifying it of the failure of a resource *R*_{*i*}₊₁, usually notified by a timeout in the wait period for the *ack* from *R*_{*i*}₊₁. In this case, the planning agent replans the workorder and reinitiates the task from the point where the failure occurred using a different resource *R*'_{*i*}₊₁.

The two remaining messages *fork* and *join* are used for parallel sequences of actions. They are described further in this document.

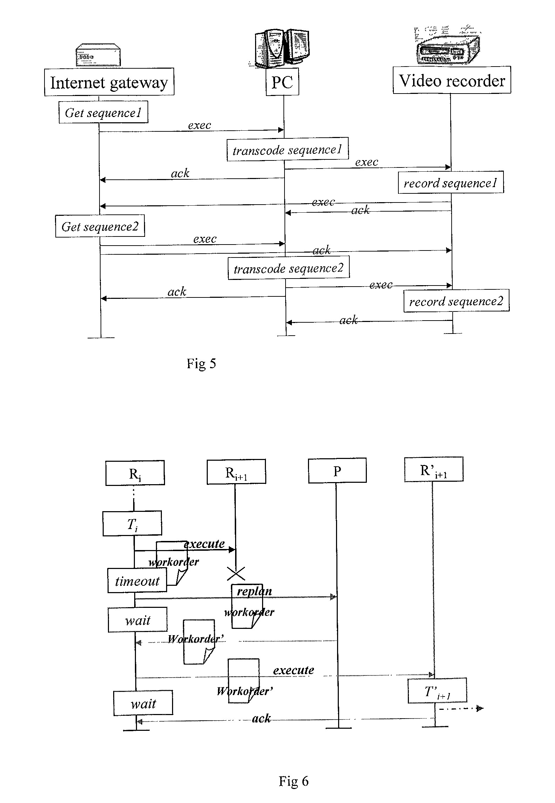

Resilience in the protocol is provided by the protocols ability to incrementally reconfigure the resource aggregate. This is achieved as follows and with reference to Figure 4.

We assume that the application has been initiated and the initial workorder representing a sequence of actions *T*_{*i*} to be performed by corresponding resources *R*_{*i*} has been constructed. The workorder has been transmitted to the first resource in the workorder. A resource *R*_{*i*} carries out its corresponding action *T*_{*i*} and on completion of the action, transmits an *ack* to resource *R*_{*i*}₋₁ (not shown) before updating the workorder to reflect the successful completion of the action *T*ᵢ and transmitting it to resource *R*_{*i*}₊₁.Resource *R*_{*i*}₊₁ then performs its task *T*_{*i*}₊₁ and sends an ack to resource *R*_{*i*} while forwarding the workorder to resource *R*_{*i*}₊₂ Figure 4. shows a situation where no resource failures occur and each preceding resource receives an ack from the downstream resource indicating that the next task has been successfully completed.

It is now useful to describe an embodiment of a workorder in more detail. Returning to the example of the video recording application, a possible format for the workorder is as follows.
Gateway: get sequence 1
PC: transcode sequence 1
Video: record sequence 1
Gateway: get sequence 2
PC: transcode sequence 2
Video: record sequence 2

This sequence of resource tasks is reflected in Figure 5 which shows the sequential recording of two pieces of multimedia data, record sequence 1 and record sequence 2. Referring to figure 5, after retrieving the data (get sequence 1) the Internet gateway sends an *exec* message along with the retrieved data, to the decoding means, here a PC. The PC performs its reformatting task (transcode sequence 1) and sends an *exec* message along with the reformatted data to the video recorder. It then sends an *ack* message back to the Internet gateway thereby notifying it that it has successfully completed its task. The workorder transmission is not shown in this case as it is assumed to be concurrent or contiguous with the transmission of the *exec* message. The video recorder records the multimedia data (record sequence 1) and sends an *exec* message back to the Internet gateway and an *ack* message back to the decoding PC. The *exec* message informs the gateway that it requires the next (second) sequence. After retrieving the data (get sequence 2), the internet gateway sends an *exec* message to the decoding PC which reformats the data (transcode sequence 2) and then sends an *ack* back to the video recorder to notify that it had received the request for the second sequence and successfully retrieved it.

Once the PC has reformatted the data, it sends it along with an *exec* message to the video recorder where the recorder carries out the record sequence 2 task. Then the PC sends an *ack* message back to the Internet gateway to signify successful completion. The video recorder records the sequence and sends an *ack* message back to the PC thus completing the global composite request. This example is a linear sequence only at this stage and does not illustrate parallel tasks or resource failure.

If one of the resources or communication between resources fails, the initiating resource will not receive a completion *ack* from the failed resource. In this case a *replan* message is sent from the initiating resource to a planning agent P where the workorder is replanned (amended) to take the failure into account and then sent to a different resource. This provides resilience by allowing dynamic modification of the workorder.

Specifically, resource *R*_{*i*}₋₁ sends an *exec* message to resource *R*_{*i*} and then enters a wait state. However, if *R*_{*i*} times out *R*_{*i*}₋₁ sends a *replan* message to the planner. The planner returns an alternative workorder (W') to *R*_{*i*}₋₁. *R*_{*i*}₋₁proceeds with the new workorder W' by sending an *exec* message to the newly assigned resource *R'*_{*i*}.

As noted, preferably the failure of resource *R*_{*i*} is manifested by a timeout in the reception of the acknowledgement by resource by the resource *R*_{*i*}₋₁. However, some other parameter or constraint may be feasible depending on the nature of the resource aggregate and their characteristics.

Figure 6 illustrates the replanning process after a failure. Here, we consider the case where the PC fails while transcoding the second sequence. The PC is designated *R*_{*i*} in figure 6 and, as can be seen, the resource *R*_{*i*}₊₁ times out and so the initiator sends the workorder to the planning means P for replanning. The new workorder W' sends back to the initiating resource *R*_{*i*} which then sends an _{*exec*} message to the alternate resource *R*'_{*i*}₊₁ designated in the new workorder W'. The process then continues as described above.

As can be seen, even the step of resource *R*_{*i*} timing out and requesting replanning of the workorder itself may be susceptible to failure. Therefore once the resource *R*_{*i*} has sent the *replan* message to the replanning means P, it enters a wait state and if the replanning means fails, the *replan* message can be sent to an alternate planning means P'.

In this example, we have assumed that the fallback policy for the transcoding PC is to have the file stored on another resource, a file server, and then resubmit the action after a delay to the alternate transcoding PC.

The rescheduled workorder is as follows:
File server: store sequence 2 and wait
PC2: transcode sequence 2
Video: record sequence 2

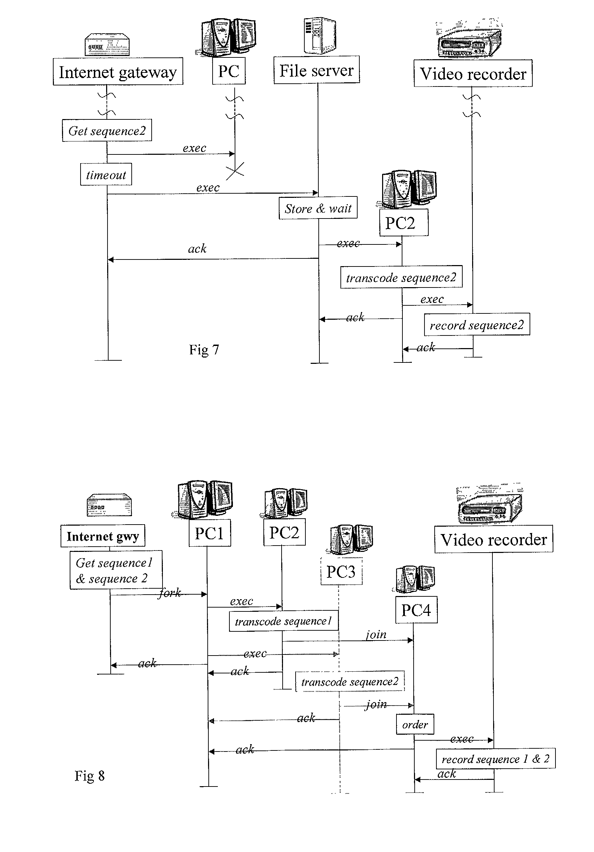

Figure 7. illustrates how a failure is detected and the resource aggregate resiliently reconfigured. Here the failure of the PC is detected by way of a timeout whereupon the workorder is modified and send to an alternate PC (PC2). Following this dynamic reconfiguration, the process continues as before.

The example shown in figure 7 may be modified to take into account duplication of tasks where, for example, during the timeout period, the 'failed' device does in fact complete its task and sends the *exec* message and data to the next device in the workorder.

To take this situation into account, tasks are managed by assigning and monitoring their individual IDs. This will be discussed in detail below.

Prior to this however, it is useful to define an extension to the protocol vocabulary to take into account the possibility of launching tasks in parallel. This situation is shown in figure 8.

Here we assign tasks of transcoding sequences to both PC2 and PC3. PC1 is responsible with executing a *fork* action. PC4 is responsible for reordering the sequences (*join*) and sending them to the video recorder.

The *fork* message from PC1 triggers two *exec* messages instead of one. The target resources PC2 and PC3 both return an *ack* to acknowledge completion as before in response to an *exec* message. However, the initiating resource PC1 will wait for three *ack*s, the first two from the tasks of the parallel branches (the two transcode tasks of PC2 and PC3) and the *ack* from the *join* transmitted by PC4 which is the acknowledgement that the two parallel tasks have been completed. If the *ack* from the *join* times out, the resource PC1 reschedules both parallel sequences.

The *join* message requires the resource PC4 to wait for a similar or associated *join* message IDs, that is, messages having the same *join* ID. The arrival of the two *join messages* with the same ID reflects that the two parallel tasks have been completed and their results can be correctly combined or otherwise manipulated.

As noted above, it is important that each task is only executed once. Or, more correctly, that the result of each task is received and acted on only once. It may be possible that in the fault tolerant system, identical tasks are executed if there are time outs and overlaps in wait periods. However, only one task result should be considered as corresponding to the output of the execution of that task.

To this end, each task of the workorder is assigned an ID which is unique to the task/resource couplet. During the rescheduling process, new tasks are assigned new IDs but couplets that remain identical keep the same ID. Two couplets are identical if they have the same task, same assigned resource and if they share the same successors couplets.

In this embodiment of the invention, the workorder may be formatted as follows:
Gateway: get sequence 1 ID-1
PC: transcode sequence 1 ID-2
Video: record sequence 1 ID-3
Gateway: get sequence 2 ID-4
PC: transcode sequence 2 ID-5
Video: record sequence 2 ID-6

If the task with ID-5 fails, the remaining workorder will be (completed tasks are indicated by strikethrough text):
**File server: store sequence 2 and wait ID-7**
**PC2:transcode sequence ID-8**
Video: record sequence 2 ID-6 /* unchanged */

Every resource keeps a record of the tasks it has successfully executed. The resource keeps the record for the duration of the session, until it explicitly disconnects from the environment, or connects to another one. When a task with an already used ID is submitted, the resource only sends an ack to the emitter and ignores the remainder. Thus, double execution of a task by a resource is prevented.

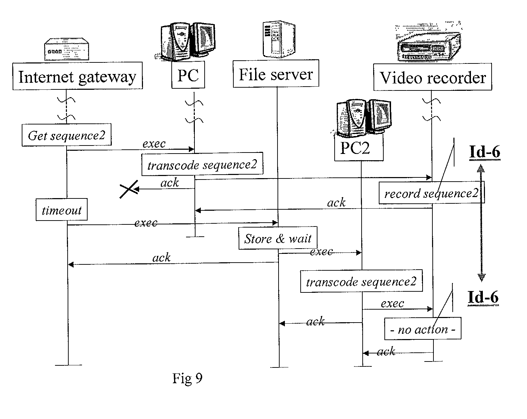

This situation is illustrated in figure 9. Here, consider only the ack message from the PC in relation to the failed transcoding of the second sequence. The original workorder and the fallback execution will therefore compete for execution. This can be seen by the PC sending an exec message to the video recorder with ID-6 as well as a new exec message being sent by the Internet gateway to the fileserver with subsequent execution by PC2 producing a duplicate exec with ID-6 at the video recorder.

However, the video recorder will act on the first valid workorder with ID-6 and remember this when the duplicate is received. In this way the redundant exec result is discarded while retaining downstream coherence. That is, there is generally no need to inform the initiating resources of the redundancy in their *exec* messages.

In a preferred embodiment, the planning step can be described in more detail as follows. During workorder planning, a planning means, or broker, creates the *workorder* which, as described above, is a plan for executing the service elements in order to implement the global application.

The creation of the workorder takes into account the constraints derived from the initial request, the resources which are available (either explicitly registered or well-known "implicit" resources such as network infrastructure etc) and the context of the application. The context includes what are known as *ecosystem* state variables, ecosystem constraints and the history of the context.

The planning step resolves the constrained problem by establishing an ecosystem global state which does not violate the ecosystem constraints. Entries in the workorder, otherwise known as transition steps, are produced by resources executing their respective tasks. The workorder solution is the ordered sequence which is applied to the ecosystem. In cases where multiple solutions exist the invention may implement an optimisation which maximises the identified objective functions which belong to either to the initial request or to the ecosystem constraints.

The particular format of the workorder may vary depending on the context which is envisaged. However, in a preferred embodiment, the workorder includes a list of tasks (service elements) which are applied sequentially to execute the composite service. These tasks are defined by the resource in charge of executing the task, identified by a *resource name*, the task itself which is to be performed, denoted by a unique *task name*, any arguments which are appropriate to the task, a task identifier, *task ID*, which is unique for the task/resource combination, and a timeout value. The timeout value indicates the length of the ack wait-state period. Once the wait-state expires, the waiting resource will trigger a replanning step.

When a process enters a fallback state, the application is replanned. The resource which is aware of the failure passes the workorder to a resource which is capable of replanning the application. The planning agent creates a new workorder following the procedure discussed above.

The new workorder may involve different resources and different tasks, but it may as well be identical to the original if the planning agent simply chooses to retry the process.

While a specific workorder format has been described, other message vocabularies and formats may be feasible. However, it can be seen that the invention provides a high degree of resilience in that should any resource fail, the protocol dynamically reconfigures the aggregation and interaction of the resources which execute the various steps in the composite application. The system is also particularly useful in that is fully decentralized with the workflow coordination function itself being capable of dynamic reconfiguration in case of failure. There is no need for a globally defined entity specifically dedicated to synchronizing and coordinating task execution.

The invention also guarantees that the composite service and its elements are executed at least once even given the failure of one resource. It also ensures that the individual service elements, or resources, are executed at most once during execution of the composite application. No service element is executed twice by the same resource and for the same purpose in the execution chain.

Although the invention has been described by way of example and with reference to particular embodiments it is to be understood that modification and/or improvements may be made without departing from the scope of the appended claims.

Where in the foregoing description reference has been made to integers or elements having known equivalents, then such equivalents are herein incorporated as if individually set forth.

## Claims

1. A method of coordinating the execution of a composite distributed application in an environment comprised of a plurality of resources, the method including the steps of:
- specifying the composite application in terms of a workorder, the workorder adapted to decompose the application into a series of discrete actions to be executed by corresponding resources;
- pipelining the workorder through the resources in such a way that each resource is responsible for executing its task, the resource forwarding the remainder of the workorder or amended workorder to the following resource;
- communicating acknowledgement of the successful operation of the resource to the resource from which it received the workorder.

2. A method as claimed in claim1 where the workorder is dynamically modified.

3. A method as claimed in any one of claims 1 or 2 wherein the workorder is dynamically modified in response to the operation or failure of one or more resources.

4. A the method of coordinating the execution of a composite distributed application including the steps of:
- initiating the application;
- constructing a workorder representing a sequence of actions *T*_{*i*} to be performed by corresponding resources *R*_{*i;*}
- transmitting the workorder to the first resource in the workorder; wherein each resource *R*_{*i*} carries out a corresponding action *T*_{*i*} and on completion of the action, transmits an acknowledgment to resource *R*_{*i-*}₁ before updating the workorder to reflect the successful completion of the action *T*_{*i*} and transmitting it to resource *R*_{*i*}₊₁.

5. A method as claimed in claim 4 wherein where resource *R*_{*i*}₋₁ does not receive the acknowledgement, the workorder is updated to reflect the failure of resource *R*_{*i*} and the workorder is transmitted to an alternative resource *R'*_{*i*}.

6. A method as claimed in claim 5 wherein the failure of resource *R*_{*i*} is manifested by a timeout in the reception of the acknowledgement by resource by the resource *R*_{*i-*}₁.

7. A method as claimed in any preceding claim wherein the workorder carries information adapted to identify one or more tasks so that where duplicate task execution occurs, the receipt of multiple workorders reflecting such task duplication can be compensated for.

8. A method as claimed in any preceding claim wherein one or more task is parallelized by forking a task into two or more sub-tasks and creating correspondingly adapted workorders.

9. A method as claimed in claim 8 wherein a corresponding recipient resource joins the one or more sub-task outputs on their completion.

10. A computer network adapted to operate in accordance with the method as claimed in any one of claims 1 to 9.

11. A computer adapted to operate as a resource acting in accordance with the method as claimed in any one of claims 1 to 9.
